## Europäisches Patentamt

## European Patent Office

## Office européen des brevets

(11) Veröffentlichungsnummer: **0 240 905 B1**

# EUROPÄISCHE PATENTSCHRIFT

(45) Veröffentlichungstag der Patentschrift: **01.09.93**

(51) Int. Cl.5: **C08F 279/02**, C08F 285/00, //(C08F279/02,212:06)

(21) Anmeldenummer: **87104730.4**

(22) Anmeldetag: **31.03.87**

(54) **Verfahren zur Herstellung von schlagfestem Poly(alkyl)styrol.**

(30) Priorität: **08.04.86 DE 3611705**

(43) Veröffentlichungstag der Anmeldung:
**14.10.87 Patentblatt 87/42**

(45) Bekanntmachung des Hinweises auf die Patenterteilung:
**01.09.93 Patentblatt 93/35**

(84) Benannte Vertragsstaaten:
**BE DE FR GB IT NL**

(56) Entgegenhaltungen:
DE-A- 2 813 328
DE-A- 3 409 656

(73) Patentinhaber: **BASF Aktiengesellschaft
Carl-Bosch-Strasse 38
D-67063 Ludwigshafen(DE)**

(72) Erfinder: **Bronstert, Klaus, Dr.
Gartenstrasse 26
6719 Carlsberg(DE)**
Erfinder: **Hoenl, Hans, Dr.
Hauptstrasse 69 a
6719 Obersuelzen(DE)**
Erfinder: **Echte, Adolf, Dr.
Leuschnerstrasse 42
6700 Ludwigshafen(DE)**
Erfinder: **Klaerner, Peter, Dr.
Hauptstrasse 62
6719 Battenberg(DE)**

**Beschreibung**

Die Erfindung geht aus von einem Verfahren zur Herstellung von mit Kautschuk schlagfest modifiziertem Poly(alkyl)-styrol, wobei man einen Reaktionsansatz bestehend aus Styrol, kernalkylierten Styrolen, seitenkettenalkylierten Styrolen oder deren Mischungen und mindestens einem kautschukartigen Polymerisat P, das Thiolgruppen P $(SH)_x$ aufweist, wobei x = ganze Zahlen von 1 bis 5 bedeuten, polymerisiert.

Zum Stand der Technik nennen wir: DE-A- 17 69 118 (1), EP-A-0 021 488(2), DE-B- 26 13 352 (3) und DE-A- 28 13 328 (4)

In (1) bzw. (2) ist die Herstellung von schlagfestem, nichttransluzentem Polystyrol beschrieben. Verwendet werden zur Herstellung dieser Produkte Mischungen aus Polybutadien und Styrol-Butadien-Blockcopolymerisaten. Nach dem in (3) beschriebenen Verfahren werden auf diskontinuierlichem Wege unter Verwendung von Styrol-Butadien-Blockcopolymerisaten transluzente, schlagfeste Polystyrole erhalten.

Des weiteren wird in (4) ein Verfahren zur Herstellung von Blockcopolymerisaten beschrieben, in dem man Polymere mit primären oder sekundären Thiol-Endgruppen mit einem radikalisch polymerisierbaren Monomer in Kontakt bringt und eine radikalische Polymerisation initiiert. Es entsteht kein schlagfestes Polystyrol, sondern ein Blockcopolymerisat, das mindestens einen Block des Ausgangs-Polymeren und mindestens einen radikalisch polymerisierten Block aufweist.

Aus der DE-A-34 09 656 ist transluzentes schlagfestes Polystyrol bekannt, das als kautschukartiges Polymerisat eine Mischung aus Polybutadien und einem linearen Butadien-Styrol-Zweiblockcopolymerisat mit verschmiertem Übergang verwendet.

Styrol-Butadien-Blockcopolymerisate sind teurer als Polybutadienkautschuke. Außerdem haben sie eine vergleichsweise hohe Lösungsviskosität, die insbesondere bei der Herstellung von schlagzähem Polystyrol mit hohen Kautschukgehalten störend ist.

Es bestand daher die Aufgabe, die in (3) verwendeten teureren Blockkautschuke durch billigere Kautschuke zu ersetzen, die ebenfalls zu transluzenten schlagfestem Polystyrol führen können und außerdem eine niedrigere Lösungsviskosität aufweisen.

Die Aufgabe wird gelöst durch ein Verfahren zur Herstellung von mit Kautschuk schlagfest modifiziertem transluzentem Polystyrol und/oder Poly-(alkyl-)styrol, bei dem man ein Reaktionsgemisch, bestehend aus den Monomeren Styrol, kernalkyliertem Styrol, seitenketten-alkyliertem Styrol oder deren Mischungen und 3-30 Gew.-%, bezogen auf Monomere, mindestens eines kautschukartigen Polymeren diskontinuierlich in einem Zweistufen-Prozeß bei 50 bis 200°C in einer ersten Stufe thermisch oder in Gegenwart Radikale bildender Initiatoren unter Rühren innerhalb von 3 bis 6 Stunden bis zu einem Umsatz von 20 bis 40 %, bezogen auf das Monomere, in Masse polymerisiert₁ wobei so gerührt wird, daß danach die während der Polymerisation im Polystyrol gebildete, dispergierte Weichkomponente einen mittleren Teilchendurchmesser von 0,1 bis 0,8 $\mu$m besitzt und das erhaltene Reaktionsprodukt in einer zweiten Stufe nach Zugabe eines Radikale bildenden Initiators in einer wäßrigen Phase, die Suspendier-hilfsmittel und Puffersalze enthält, dispergiert, wobei die wäßrige Phase das 0.75-bis 2-fache der Menge des Reaktionsproduktes der ersten Stufe beträgt und innerhalb von 5 bis 15 Stunden ebenfalls unter Rühren bis zu einem Umsatz von 95 bis 99,95 % bezogen auf das Monomere weiterpolymerisiert, dadurch gekennzeichnet, daß das eingesetzte kautschukartige Polymere der Formel P $(SH)_x$ entspricht und ein mittleres Molekulargewicht (GPC-Mittel) im Bereich von 20.000 bis 200.000 besitzt, wobei x die Anzahl von Thiolgruppen pro Kautschukmolekül darstellt und eine ganze Zahl von 1 bis 5 bedeutet und P ein Polymerisat aus mehr als 80 % konjugierten Dienen mit 4 bis 4 C-Atomen oder ein Copolymerisat aus Butadien oder Isopren und bis zu 20 % Vinylaromat ist.

Das erfindungsgemäße Verfahren ermöglicht zum einen die Herstellung von transluzenten schlagfesten Polystyrolen oder Polyalkylstyrolen unter Verwendung von Kautschuken auf der Basis von Polybutadien. Zum anderen ist die Herstellung nicht-transluzenter Produkte mit verbesserten Eigenschaften möglich.

Nachstehend werden das erfindungsgemäße Verfahren und die zu seiner Durchführung erforderlichen Ausgangsstoffe näher beschrieben.

Verfahren zur Herstellung von schlagfestem Polystyrol sind dem Fachmann aus (1), (2) oder der DE-B- 17 70 392 bekannt. Verfahren zur Herstellung von schlagfestem und zugleich transluzentem Polystyrol sind außerdem in der unter (3) genannten Druckschrift beschrieben.

Das erfindungsgemäße Verfahren wird in Anlehnung an die bekannten Verfahren diskontinuierlich in mindestens 2 Verfahrensstufen durchgeführt. Dabei wird in der ersten Stufe das in den Monomeren (z.B. Styrol) gelöste kautschukartige Polymerisat unter Rühren, also unter Einwirkung von Scherkräften, in der dem Fachmann bekannten Weise vorpolymerisiert.

Der Vorpolymerisation wird ein Reaktionsansatz unterworfen, der im Sinne der vorliegenden Erfindung aus den Monomeren und dem kautschukartigen Polymerisat besteht, wobei der Reaktionsansatz, bezogen

2

auf das Gemisch aus Monomeren und kautschukartigem Polymerisat 3 bis 30 Gew.-%, vorzugsweise 4 bis 16 und insbesondere 5 bis 14 Gew.-% des kautschukartigen Polymerisates enthält.

Dieser ersten Verfahrensstufe schließt sich eine zweite Verfahrensstufe, bei der die Polymerisation in Suspension durchgeführt wird, an.

Als Monomere kommen Styrol, alkylsubstituierte Styrole oder Gemische in Betracht. Für den vorgesehenen verwendungszweck wird vorzugsweise ausschließlich das preiswerte Styrol verwendet. Es können außerdem bevorzugt Mischungen aus Styrol und Kernalkylierten Styrolen wie p-Methylstyrol oder $\alpha$-Methylstyrol oder andere substituierte Styrole Verwendung finden.

Als kautschukartiges Polymerisat im Sinne des erfindungsgemäßen Verfahrens kommen die folgenden beschriebenen modifizierten Polydiene in Frage, die eine oder bis zu 5 endständige oder statistisch über die Kettenlänge verteilte SH-Gruppen enthalten. Sie können allgemein durch die Formel P $(SH)_x$ charakterisiert werden, wobei P ein Polymerisat aus mehr als 80 % konjugierten Dienen mit 4 bis 5 C Atomen, wie Butadien oder Isopren oder ein Copolymerisat aus diesen Monomeren und bis zu 20 % Vinylaromat darstellt und x eine ganze Zahl von 1 bis 5 ist.

Die Struktur und Herstellung derartiger Produkte ist dem Fachmann bekannt, z.ß. aus (4), der US-A- 3 755 269 und der GB-A- 1 432 782 sowie 1 432 783. Solche kautschukartigen Polymerisate werden bevorzugt durch anionische Polymerisation hergestellt, z.B. wird ein konjugiertes Dien, wie Butadien. in an sich bekannter Weise in einem Lösungsmittel, bevorzugt einem Kohlenwasserstoff. wie sec.-butyl-lithium, polymerisiert. Nach Beendigung der Polymerisation setzt man das lebende Polymere sodann mit mindestens 1 Mol Ethylensulfid, Propylensulfid oder anderen Episulfiden je Mol Katalysator um, wobei eine -$CH_2$-$CH_2$-S-Li oder eine -$CH_2$-CH-Li-Endgruppe in das Molekül eingebaut wird. Verwendet man bifunktionelle Starter für die Polymerisation, so enthält der Kautschuk nach der Umsetzung mit den genannten Sulfiden 2-S-Li-Endgruppen. Möglich. jedoch weniger bevorzugt, ist ferner, fertige Kautschuke in an sich bekannter Weise, z.B. nach der Arbeitsweise "Metallation of unsaturated polymers and formation of graft polymers", Tate et al. , J. of pol. Sc. Part A-1, Vol. 9 (1971) S. 139-145, zu metallisieren und die auf diese Weise statistisch im Polymermolekül enthaltenen anionischen Gruppen mit den oben genannten Sulfiden in -S-Li-Gruppen umwandelt.

Als kautschukartiges Polymerisat P $(SH)_x$ soll vorzugsweise Polybutadien mit nur einer Mercaptangruppierung eingesetzt werden. Das mittlere Molekulargewicht (GPC-Mittel) des kautschukartigen Polymerisats der genannten Formel soll im Bereich von 20.000 bis 200.000, vorzugsweise im Bereich von 30.000 bis 100.000 liegen.

Selbstverständlich können auch Mischungen von kautschukartigen Polymerisaten der allgemeinen Formel P $(SH)_x$ mit anderen, nichtmodifizierten Kautschuken, wie Polybutadien, Polyisopren und dgl. Verwendung finden, wobei diese Kautschuke Molekulargewichte im Bereich von 120.000 bis 400.000 haben sollen. Die Mischungen sollen mindestens 30 % des kautschukartigen Polymerisats P $(SH)_x$ enthalten. Die Mischungsverhältnisse sollen derartig gewählt werden, daß das mittlere Molekulargewicht der Mischung im Bereich von 30.000 bis 100.000 liegt.

Bei dem erfindungsgemäßen Verfahren wird in erster Stufe thermisch oder in Gegenwart von peroxidische Radikale bildenden Initiatoren polymerisiert. Als solche Initiatoren kommen solche aus der Gruppe der Alkyl- oder Acylperoxide, wie Hydroperoxide, Perester oder Peroxicarbonate in Betracht. Vorzugsweise werden die pfropfaktiven Initiatoren Dibenzoylperoxid, tert.-Butylperoxi-2-ethylhexanoat oder das tert.-Butylperbenzoat angewendet. Die Initiatoren werden in Mengen von 0,02 bis 0,2 Gew.%, bezogen auf die Monomeren, angewendet. Die Anwendung von Initiatoren ist dem Fachmann bekannt; es ist ihm außerdem bekannt, den Zerfall der Initiatoren entweder durch Zusätze wie Amine, oder aber durch Wahl geeigneter Temperaturintervalle zu beschleunigen, um die Pfropfaktivität zu erhöhen.

Das erfindungsgemäße Verfahren kann auch in Gegenwart von Kettenüberträgern durchgeführt werden. Es kommen hierzu die üblicherweise verwendeten Mercaptane mit 4 bis 18 C-Atomen in Betracht. Von den genannten Mercaptanen haben sich besonders das n-Butylmercaptan, das n-Octylmercaptan sowie das n- oder t-Dodecylmercaptan bewährt. Die Mercaptane werden in Mengen von 0,01 bis 0,3 Gew.%, bezogen auf die Monomeren angewendet.

Das erfindungsgemäße Verfahren kann auch in Gegenwart von Schmiermitteln, insbesondere von Mineralölen, durchgeführt werden. Vorzugsweise werden diese Mittel bereits dem Reaktionsansatz zugesetzt. In Betracht kommen insbesondere Weißöle, d,h, aromatenarme technische Weißöle bzw. aromatenfreies medizinisches Weißöl; letzteres insbesondere, wenn die nach dem Verfahren enthaltenen schlagzähen Polystyrole zur Herstellung von Formteilen Verwendung finden, die den lebensmittelgerechten Bedingungen im Verpackungssektor genügen müssen. Auch Stabilisatoren können während der Polymerisation zugegen sein. In Betracht kommen vor allem die dem Fachmann bekannten sterisch gehinderten Phenole in üblichen Mengen.

3

Bei dem Verfahren wird in der ersten Stufe innerhalb von 3 bis 6 Stunden bis zu einem Umsatz von 20 bis 40 %, vorzugsweise von 25 bis 35 %, bezogen auf das Monomere polymerisiert. Die Polymerisation wird bei erhöhter Temperatur durchgeführt, wobei darunter Temperaturen im Bereich von 50 bis 200°C, insbesondere im Bereich von 60 bis 150°C zu verstehen sind. Der Fachmann weiß, wie er bei bestimmter Verfahrensführung aus den genannten Temperaturintervallen die für das Verfahren erforderliche Temperatur bei Verwendung bestimmter Initiatoren oder bei Zielrichtung bestimmter Produkte herauszuwählen hat. Das Verfahren kann isothermisch oder mit einem Temperaturprofil betrieben werden.

Die erste Stufe wird in einem Reaktor unter Rühren durchgeführt, wobei die Polymerisation so abläuft, daß nach einem bestimmten Umsatz sich zwei Phasen ausbilden, nämlich eine kohärente Kautschuk-Styrol-Phase und eine nichtkohärente Polystyrol-Styrol-Phase. Bei Steigerung des Umsatzes tritt eine Phaseninversion ein, wobei nun die Polystyrol-Phase kohärent und die Kautschuk-Styrol-Phase nichtkohärent ist.

Solche Vorgänge sind bekannt und beispielsweise in Echte, Haaf, Hambrecht: Angew. Chemie 93 (4), 372-388 (1981) beschrieben. Nach der Phaseninversion muß weiter gerührt werden, also durch geeignete, dem Fachmann bekannte Scherbedingungen die jeweils angestrebte mittlere Teilchengroße erreicht werden. Die hierfür erforderlichen Scherbedingungen sind abhängig u.a. von der gegebenen Reaktorgröße, dem Füllgrad, der Art der Füllung und der Viskosität sowie der Art des Rührorgans. Die Scherbedingungen können vom Fachmann anhand weniger Versuche festgelegt werden. Hierzu finden sich Hinweise in Freeguard; J. Appl. Pol. Sci. 15, 1649 (1971).

Die Scherbedingungen werden so gewählt, daß sich innerhalb des modifizierten Polystyrols eine dispergierte Weichkomponente ausgebildet hat mit einem mittleren Teilchendurchmesser von 0,1 bis 0,8 $\mu$m. Es ist hierbei der $d_{50}$-Wert als Zahlenmittel zu verstehen. Vorzugsweise kann die mittlere Teilchengröße auch im Bereich von 0,2 bis 0,6 $\mu$m liegen. Das Ergebnis der Polymerisation der ersten Stufe ist ein Reaktionsprodukt, worin ein Pfropfmischpolymerisat von Styrol auf das kautschukartige Polymerisat, das die Weichphase bildet, enthalten ist. Diese Weichphase ist in der Hartmatrix, also dem Polystyrol, fein verteilt und kann auf Elmi-Aufnahmen von Dünnschnitten dargestellt werden. Die Teilchen sind sogenannte Kapselteilchen. Sie enthalten eine Kautschukwand, dagegen keine weiteren Kautschukstrukturelemente innerhalb des Teilchens.

Das Reaktionsprodukt der ersten Stufe wird nun in einer zweiten Stufe in wäßriger Suspension zu Ende polymerisiert. Die wäßrige Phase der Suspension beträgt das 0,75- bis 2-fache der Phase des Reaktionsproduktes der ersten Stufe. Die wäßrige Phase enthält die üblichen wasserlöslichen Suspensionsmittel, wie Methylcellulose, Oxypropylcellulose, Polyvinylalkohol, Polyvinylpyrrolidon oder auch unlösliche anorgsnische Dispergiermittel wie Bariumsulfat. Bei löslichen Dispergiermitteln verwendet man im allgemeinen zwischen 0,05 bis 2 Gew.% des Mittels, bezogen auf die Dispersion. Der Reaktor wird in der zweiten Phase ebenfalls gerührt, so daß sich ein Perlpolymerisat ausbildet. Derartige Arbeitsweisen sind bekannt. Sie sind beispielsweise in der Literaturstelle (3) beschrieben. Die Polymerisation wird in einem Temperaturbereich von 50 bis 200°C vorgenommen. Man kann isotherm polymerisieren aber auch mit ansteigendem Temperaturprofil. Es ist erforderlich, dem Reaktionsansatz vor dem Dispergieren einen in Radikale zerfallenden Initistor zuzusetzen. In Frage kommen die gleichen Initiatoren, wie sie oben bei der Schilderung der ersten Verfahrensstufe verwendet werden. Im allgemeinen wird so gearbeitet, daß 0,01 bis 0,30 Gewichtsteile Initiator, bezogen auf die Monomeren in der ersten Verfahrensstufe und 0,01 bis 0,20 Gewichtsteile, bezogen auf die Gewichtsteile der Monomeren in der zweiten Verfahrensstufe Verwendung finden.

Im Anschluß an die Polymerisation wird das Polymerisat in üblicher Weise gewonnen. Dies kann z.B. durch Entgasen der Mischung auf einem Entgasungsextruder entstehen, indem das Reaktionsprodukt von überschüssigem Styrol und gegebenenfalls von Lösungsmittel befreit wird. Han wählt dabei Temperaturen zwischen 180 bis 260°C und in der letzten Entgasungsstufe Drücke von 2 bis 80 mbar an.

Die nach dem erfindungsgemaßen Verfahren erhaltenen schlagfesten und gegebenenfalls transluzenten Polystyrole können nach den für Thermoplaste bekannten Verfahren verarbeitet werden, z.B. durch Extrudieren, Spritzgießen. Kalandrieren, Hohlkörperblasen, Pressen oder Sintern. Besonders bevorzugt werden aus dem nach dem erfindungsgemäßen Verfahren hergestellten Produkten geformte Gebilde durch Spritzgießen hergestellt. Insbesondere eignen sich transluzente Produkte zur Herstellung von Folien für den Verpackungssektor, z.B. solche, die im Nahrungsmittelbereich Verwendung finden.

Die von Proben der in den Beispielen und Vergleichsversuchen erhaltenen Produkte aufgeführten Eigenschaften werden wie folgt gemessen:

1. Die Viskositätszahl - VZ der Hartmatrix in ml/g wurde analog DIN 53 724 bestimmt.

2. Die Streckspannung - ST in N/mm$^2$ wurde analog DIN 53 455 bestimmt.

3. Die Lochkerbschlagzähigkeit - $a_{kl}$ in kJ/m$^2$ wird nach dir DIN 53 753 bestimmt.

4. Zur Bewertung der Transluzenz TL der beim erfindungsgemäßen Verfahren erhaltenen Produkte wurde zunächst eine Skala erstellt. Diese Skala umfaßt die Noten 1 bis 9 in der folgenden Tabelle 1, wobei die niedrigeren Noten eine gute Transluzenz repräsentieren` Um die in der Tabelle 1 angeführten Noten zu definieren, wurde ein handelsübliches schlagzähes Polystyrol (Polystyrol KR 2791 der BASF Aktiengesellschaft) mit Kapselteilchenmorphologie zugrunde gelegt, das die Benotung 4 hat. Abmischungen dieses Produktes mit den in der Tabelle 1 genannten Gewichtsverhältnissen mit Standardpolystyrol der VZ a 96 ml/g ergaben die Werte von 3 bis 1 für die Transluzenz. Durch Abmischung mit einem schlagfesten handelsüblichen Polystyrol mit Zellenteilchenmorphologie (Polystyrol 476 L der BASF Aktiengesellschaft) wurden Mischungen mit höherer Transluzenz, also mit den Werten 5 bis 9 der Tabelle erhalten. Die Messung erfolgte durch visuellen Vergleich von 2 mm starken preßplättchen aus Probematerial mit ebensolchen aus der genannten Eichsubstanz.

5. Von den Proben der Beispiele und Versuche wurden in bekannter weise elektronenmikroskopische Dünnschichtaufnahmen angefertigt, die zur Bestimmung der Teilchengröße der Weichkomponentenphase dienen.

Tabelle 1

| Note für die Transluzenz | Produkt A | Abmischung in Gew.-Teilen Standardpolystyrol | Produkt B |
|---|---|---|---|
| 1 | 20 | 80 | 0 |
| 2 | 40 | 60 | 0 |
| 3 | 60 | 40 | 0 |
| 4 | 100 | 0 | 0 |
| 5 | 96 | 0 | 4 |
| 6 | 92 | 0 | 8 |
| 7 | 88 | 0 | 12 |
| 8 | 84 | 0 | 16 |
| 9 | 80 | 0 | 20 |

Die Erfindung wird nachstehend anhand von Beispielen näher erläutert. Alle darin angegebenen Teile sind Prozente und beziehen sich, sofern nichts anderes vermerkt, auf das Gewicht.

Beispiele 1 bis 22

Den in Tabelle 2 angegebenen Gewichtsteilen an üblichem nicht modifiziertem Polybutadien (Buna CB HX 529 C von Bayer) und an modifiziertem Polybutadien, P $(SH)_x$ (PB $CH_2CH_2SH$) wurden noch 2,3 Gew.-Teile eines Weißöls sowie soviel Gewichtsteile an Styrol zugesetzt, daß die Summe dieser Bestandteile 100 beträgt. Außerdem wurden dem Reaktionsansatz noch 0,12 Gew.-Teile eines sterisch gehinderten Phenols als Stabilisator zugesetzt.

Weiterhin sind in Tabelle 2 die mittleren Molekulargewichte der modifizierten Polybutadien-Typen wiedergegeben. sowie die Anteile an t-Dodecylmerkaptan (TDM) und an Dibenzoylperoxid (BPO).

In einem mit einem Anker-Rührer ausgestatteten Kessel mit einem Fassungsvermögen von 5 Litern wurden die in der Tabelle 2 wiedergegebenen Ausgangsmischungen in Gegenwart von TDM thermisch bei 123°C (oder bei Verwendung von 0.1 Gew.-% BPO bei 86°C) isotherm bis zu einem Umsatz von jeweils 35 % in Masse polymerisiert. Es wurde in allen Fällen mit 200 Umdrehungen pro Minute gerührt.

Danach wird in wäßriger Suspension weiterpolymerisiert. Hierzu werden 0,1 Teile Dicumylperoxid und po Kilogramm der erhaltenen Reaktionsmischung, 900 ml Wasser. 9,0 g eines Suspensionshilfsmittels auf Basis von Polyvinylpyrrolidon und 1,8 g Natriumphosphat zugegeben. In Suspension wurde bei einem Füllgrad von 90 % bei 300 Rührerumdrehungen pro Minute jeweils isotherm 3 Stunden bei 110°C, 3 Stunden bei 130°C und 4 Stunden bei 140°C bis zu einem Umsatz von 100 %. bezogen auf Styrol. polymerisiert. Schließlich werden die auspolymerisierten Produkt-Perlen abfiltriert. mit Trinkwasser gewaschen und bei 60°C und 14 Torr getrocknet.

Tabelle 2 ist zu entnehmen. daß bei alleinigem Zusatz von PB-$CH_2CH_2$SH der, günstigste Molekulargewichtsbereich des Kautschuks von 20.000 bis 150.000 liegt. Es resultieren daraus schlagfeste und zugleich transluzente Polystyrole.

Weiterhin ist ersichtlich, daß auch Mischungen aus üblichem. nichtmodifiziertem Polybutadien PB und PB $CH_2CH_2$SH zu schlagfestem transluzentem Polystyrol führen. Die Werte der Tabelle 2 zeigen schließlich. daß mit Hilfe von PB $CH_2CH_2$SH sowohl mittels thermischer als auch mittels peroxidisch initiierter Fahrweise transluzentes schlagfestes Polystyrol hergestellt werden kann.

Vorteilhaft ist ferner, daß das erfindungsgemäße Verfahren bei ausschließlicher Anwendung von kautschukartigem Polymerisat $P(SH)_x$ ohne Probleme mit Mengen von bis zu ca. 25 Gew.% (bezogen auf den Reaktionsansatz) durchgeführt werden kann. Bei üblichen Polybutadienen treten schon bei Mengen von 15 Gew.% Kautschuk Probleme mit der Viskosität bei Massepolymerisationen auf.

Die Proben der Versuche Nr. 5, 6, 9, 12 zeigen keine ausreichende Transluzenz und sind somit nicht als beispielhaft für das bevorzugte Verfahren zur Herstellung schlagfester und transluzenter Poly(alkyl)-styrole heranzuziehen. Vergleicht man Versuch 9 mit Versuch 18, so ist festzustellen, daß bei Polymerisation mit Radikalstarter selbst noch ein Anteil von nur 33 % des Kautschuks $P(SH)_x$, bezogen auf Gesamtkautschuk aus modifiziertem und nichtmodifiziertem Kautschuk noch eine vertretbare Transluzenz von 4,0 ergibt. Bei nicht peroxidisch initiierter Fahrweise sollte der Anteil $R(SH)_x$ am Gesamtkautschuk nicht unter 50 % betragen (vgl. Versuch 8 in Verbindung mit Versuch 9).

Tabelle 2

| Nr. | | 1 | 2 | 3 | 4 | 5 | 6 | 7 | 8 | 9 |
|---|---|---|---|---|---|---|---|---|---|---|
| PB | (%) | 0 | 0 | 0 | 0 | 0 | 0 | 1,98 | 3,95 | 5,92 |
| PB $CH_2$ $CH_2$ SH | (%) | 7,90 | 7,90 | 7,90 | 7,90 | 7,90 | 7,90 | 5,92 | 3,95 | 1,98 |
| MG (PB $CH_2$ $CH_2$ SH) $\times 10^{-3}$ | | 38 | 60 | 85 | 105 | 160 | 250 | 38 | 38 | 38 |
| TDM | (%) | 0,1 | 0,1 | 0,1 | 0,1 | 0,1 | 0,1 | 0,1 | 0,1 | 0,1 |
| BPO | (%) | 0 | 0 | 0 | 0 | 0 | 0 | 0 | 0 | 0 |
| | | | | | | | | | | |
| VZ | (ml/g) | - | 72,5 | 73,8 | 74,1 | 72,2 | 70,8 | 73,2 | 72,2 | 70,3 |
| ST | (N/mm$^2$) | 28,4 | 31,9 | 36,2 | 33,6 | 27,6 | 21,4 | 35,9 | 35,6 | 32,7 |
| $a_{kl}$ | (kJ/m$^2$) | 9,1 | 5,3 | 5,5 | 6,7 | 10,0 | 10,2 | 3,8 | 4,1 | 5,5 |
| TL | | 2,0 | 2,5 | 3,0 | 6,0 | 10,0 | 10,0 | 2,5 | 4,5 | 10,0 |
| | | | | | | | | | | |
| Weichphase [µm] $d_{50}$-Wert (ca.) | | - | 0,5 | 0,5 | 1,0 | 2,0 | 3,0 | 0,2 | 0,2 | 1,0 |

Tabelle 2 (Fortsetzung)

| Nr. | | 10 | 11 | 12 | 13 | 14 | 15 | 16 | 17 | 18 |
|---|---|---|---|---|---|---|---|---|---|---|
| PB | (%) | 1,98 | 3,95 | 5,92 | 0 | 0 | 0 | 1,98 | 3,95 | 5,92 |
| PB $CH_2$ $CH_2$ SH | (%) | 5,92 | 3,95 | 1,98 | 15,80 | 23,70 | 7,90 | 5,92 | 3,95 | 1,98 |
| MG (PB $CH_2$ $CH_2$ SH) x $10^{-3}$ | | 60 | 60 | 60 | 60 | 60 | 38 | 38 | 38 | 38 |
| TDM | (%) | 0,1 | 0,1 | 0,1 | 0,1 | 0,1 | 0 | 0 | 0 | 0 |
| BPO | (%) | 0 | 0 | 0 | 0 | 0 | 0,1 | 0,1 | 0,1 | 0,1 |
| VZ | (ml/g) | 71,6 | 70,3 | 72,2 | - | - | - | - | - | 127,2 |
| ST | (N/mm²) | 31,7 | 33,8 | 32,5 | - | - | 54,4 | 51,6 | 44,7 | 41,5 |
| $a_{kl}$ | (kJ/m²) | 6,1 | 6,2 | 7,8 | -[1] | -[1] | 5,2 | 4,3 | 6,7 | 4,5 |
| TL | | 4,5 | 6,0 | 10,0 | 10,0 | 10,0 | 3,0 | 4,5 | 4,5 | 4,0 |
| Weichphase [µm] $d_{50}$-Wert (ca.) | | 0,2 | 0,2 | 0,8 | 5,0 | - | 0,1 | 0,1 | 0,1 | 0,2 |

[1] gummiartig

EP 0 240 905 B1

## Tabelle 2 (Fortsetzung)

| Nr. | | 19 | 20 | 21 | 22 |
|---|---|---|---|---|---|
| PB | (%) | 0 | 1,98 | 3,95 | 5,92 |
| PB CH₂ CH₂ SH | (%) | 7,90 | 5,92 | 3,95 | 1,98 |
| MG (PB CH₂ CH₂ SH) x 10⁻³ | | 60 | 60 | 60 | 60 |
| TDM | (%) | 0 | 0 | 0 | 0 |
| BPO | (%) | 0,1 | 0,1 | 0,1 | 0,1 |
| VZ | (ml/g) | – | – | 129,5 | 123,7 |
| ST | (N/mm²) | 41,1 | 45,4 | 41,3 | 37,6 |
| akl | (kJ/m²) | 4,5 | 4,5 | 5,4 | 7,1 |
| TL | | 5,5 | 6,5 | 6,0 | 4,5 |
| Weichphase [µm] d₅₀-Wert (ca.) | | 0,2 | 0,2 | 0,2 | 0,3 |

**Patentansprüche**

1. Verfahren zur Herstellung von mit Kautschuk schlagfest modifiziertem, transluzentem Polystyrol und/oder Poly(alkyl-)styrol, bei dem man ein Reaktionsgemisch, bestehend aus den Monomeren Styrol, kernalkylierten Styrolen, seitenketten-alkylierten Styrolen oder deren Mischungen und 3-30 Gew.-%, bezogen auf Monomere, mindestens eines kautschukartigen Polymeren diskontinuierlich in einem Zweistufen-Prozeß bei 50 bis 200°C in einer ersten Stufe thermisch oder in Gegenwart Radikale bildender Initiatoren unter Rühren innerhalb von 3 bis 6 Stunden bis zu einem Umsatz von 20 bis 40 %, bezogen auf das Monomere, in Masse polymerisiert, wobei so gerührt wird, daß danach die während der Polymerisation im Polystyrol gebildete, dispergierte Weichkomponente einen mittleren Teilchendurchmesser von 0,1 bis 0,8 µm besitzt und das erhaltene Reaktionsprodukt in einer zweiten Stufe nach Zugabe eines Radikale bildenden Initiators in einer wäßrigen Phase, die Suspendierhilfsmittel und Puffersalze enthält, dispergiert, wobei die wäßrige Phase das 0.75- bis 2-fache der Menge des Reaktionsproduktes der ersten Stufe beträgt und innerhalb von 5 bis 15 Stunden ebenfalls unter Rühren bis zu einem Umsatz von 95 bis 99,95 %, bezogen auf das Monomere weiterpolymerisiert, dadurch gekennzeichnet, daß das eingesetzte kautschukartige Polymere der Formel P (SH)ₓ entspricht und ein mittleres Molekulargewicht (GPC-Mittel) im Bereich von 20.000 bis 200.000 besitzt, wobei x die Anzahl von Thiolgruppen pro Kautschukmolekül darstellt und eine ganze Zahl von 1 bis 5 bedeutet und P ein Polymerisat aus mehr als 80 % konjugierten Dienen mit 4 bis 5 C-Atomen oder ein Copolymerisat aus Butadien oder Isopren und bis zu 20 % Vinylaromat ist.

**2.** Verfahren nach Anspruch 1, dadurch gekennzeichnet, daß außer dem kautschukartigen Polymerisat P (SH)$_x$ mindestens ein weiteres kautschukartiges nichtmodifizierten Polymerisat mit einer solchen mittleren Molmasse anwesend ist, daß das mittlere Molgewicht der Mischung 30 000 bis 100 000 beträgt und das Polymerisat P (SH)$_x$ in einem Anteil von mindestens 30 %, bezogen auf die Kautschukmischung, enthalten ist.

**3.** Verfahren nach Anspruch 1, 2 und 3, dadurch gekennzeichnet, daß die Polymerisation in Gegenwart eines Kettenübertragungsmittels erfolgt.

**Claims**

**1.** A process for preparing impact-resistant translucent rubber-modified polystyrene and/or poly(alkyl)-styrene in which a reaction mixture consisting of the monomers styrene, ring-alkylated styrenes, sidechain-alkylated styrenes or mixtures thereof and from 3 to 30% by weight, based on monomer, of one or more rubbery polymers is polymerized batchwise in a two-stage process at from 50 to 200 ° C in a first stage thermally or in the presence of free radical initiators by stirring in the absence of a solvent for from 3 to 6 hours to a conversion of from 20 to 40%, based on the monomer, the stirring being carried out in such a way that thereafter the dispersed soft component formed during the polymerization in the polystyrene has a median particle diameter of from 0.1 to 0.8 $\mu$m, and the reaction product obtained is dispersed in a second stage, after addition of a free radical initiator, in an aqueous phase which contains suspending assistants and buffer salts and comprises from 0.75 to 2 times the amount of the reaction product of the first stage, and again with stirring is further polymerized,in the course of from 5 to 15 hours to a conversion of from 95 to 99.95%, based on the monomer, wherein the rubbery polymer used conforms to the formula P-(SH)$_x$ and has an average molecular weight (GPC) within the range from 20,000 to 200,000, x being the number of thiol groups per rubber molecule and ranging from 1 to 5 and P being a polymer formed from more than 80% of conjugated dienes having 4 or 5 carbon atoms or being a copolymer of butadiene or isoprene and up to 20% of an aromatic vinyl.

**2.** A process as claimed in claim 1, wherein, in addition to the rubbery polymer P-(SH)$_x$, at least one further rubbery non-modified polymer is present with an average molecular weight such that the average molecular weight of the mixture is from 30,000 to 100,000 and the polymer P-(SH)$_x$ is present in a proportion of not less than 30%, based on the rubber mixture.

**3.** A process as claimed in claim 1, 2 or 3, wherein the polymerization is carried out in the presence of a chain transfer agent.

**Revendications**

**1.** Procédé de préparation de polystyréne et/ou de poly(alkyl)styréne translucide, modifié par un caoutchouc dans le sens de la résistance aux chocs, dans lequel on polymérise un mélange réactionnel, composé des monomères styrène, styrènes alkylés sur le noyau, styrènes alkylés sur les chaînes latérales ou leurs mélanges et de 3-30% en poids, par rapport au monomère, d'au moins un polymère caoutchouteux, de façon discontinue en une opération en deux étapes à 50-200 ° C, la polymérisation étant conduite en masse, dans une première étape, thermiquement ou en présence d'initiateurs radicalalres, sous agitation pendant 3 à 6 h Jusqu'à un degré de transformation de 20 à 40% par rapport au monomère, l'agitation étant telle qu'après cela, le composant mou dispersé, formé dans le polystyrène au cours de la polymérisation, ait un diamètre moyen de particules de 0,1 à 0,8 $\mu$m, et dans une seconde étape, on disperse le produit réactionnel obtenu, après addition d'un initiateur radicalaire, dans une phase aqueuse qui contient des adjuvants de dispersion et des sels tampons, le volume de la phase aqueuse correspondant à 0,75-2 fois la quantité du produit réactionnel de la première étape, et on poursuit la polymérisation pendant 5 à 15 h, également sous agitation, jusqu'à un degré de transformation de 95 à 99,95% par rapport au monomère, caractérisé en ce que le polymère caoutchouteux utilisé répond à la formule P(SH)$_x$ et a un poids moléculaire moyen (moyenne par CPG) dans la gamme de 20 000 à 200 000, x représentant le nombre de groupements thiol par molécule de caoutchouc et étant mis pour un nombre entier de 1 à 5, et P étant un produit de polymérisation de plus de 80% de diènes conjugués à 4-5 atomes de carbone ou un produit de copolymérisation de butadiène ou d'isoprène et, pour 20% au maximum de carbure vinylaromatique.

2. Procédé selon la revendication 1, caractérisé en ce qu'en dehors du polymère P(SH)$_x$, il est présent au moins un autre polymère caoutchouteux non modifié ayant une masse molaire moyenne telle que le poids moléculaire moyen du mélange se situe entre 30 000 et 100 000, et en ce que le polymère P-(SH)$_x$ est contenu dans une proportion d'au mmoins 30% par rapport au mélange de caoutchoucs.

3. Procédé selon la revendication 1 ou 2, caractérisé en ce que la polymérisation se développe en présence d'un catalyseur de transfert de chaîne.